# EUROPÄISCHE PATENTSCHRIFT

(11) **EP 1 760 239 B1**
(45) Veröffentlichungstag und Bekanntmachung des Hinweises auf die Patenterteilung: **07.04.2010**
(21) Anmeldenummer: 06016988.5
(22) Anmeldetag: 16.08.2006
(51) Int. Cl.: E05F 15/12

(54) **Betätigungs-Vorrichtung und Verfahren zum Betätigen von Karosserie-Bauteilen eines Fahrzeuges**
Driving device and method for operating a body part of a vehicle
Dispositif et procédé d'actionnement d'une pièce de carrosserie de véhicule automobile

(30) Priorität: 06.09.2005 DE 102005042408
(43) Veröffentlichungstag der Anmeldung: 07.03.2007
(73) Patentinhaber: SUSPA Holding GmbH, 90518 Altdorf (DE)
(72) Erfinder: Preis, Johannes, 93077 Bad Abbach/Lengfeld (DE); Hollerbaum, Bernd, 91207 Lauf (DE)
(74) Vertreter: Rau, Albrecht

(56) Entgegenhaltungen:
- DE-A1- 1 708 453
- DE-U1- 29 701 617
- US-A- 3 716 945
- US-A- 6 137 249

## Beschreibung

Die Erfindung betrifft eine Betätigungs-Vorrichtung zum Betätigen von Karosserie-Bauteilen, insbesondere einer Heckklappe, eines Fahrzeuges. Ferner betrifft die Erfindung ein Verfahren zum Betätigen von Karosserie-Bauteilen, insbesondere einer Heckklappe, eines Fahrzeuges.

Betätigungs-Vorrichtungen zum Betätigen einer Heckklappe weisen eine Antriebs-Einheit und eine Kraftübertragungs-Einheit auf, wobei zur Entkopplung dieser eine elektromechanische Kupplung vorgesehen ist. Die elektromechanische Kupplung ist zwischen der Antriebs-Einheit und der Kraftübertragungs-Einheit angeordnet und ermöglicht eine Entkopplung derart, dass bei auf Wunsch geöffneter Kupplung ein uneingeschränktes manuelles Betätigen der Heckklappe möglich ist. Nachteilig ist, dass derartige Betätigungs-Vorrichtungen aufgrund der elektromechanischen Kupplung aufwändig und teuer sind.

Aus der US 3 716 945 und der US 6 137 249 sind Vorrichtungen zum Schließen einer Heckklappe eines Kraftfahrzeuges bekannt.

Aus DE 297 01 617U und DE 1708453 sind Vorrichtungen mit Antriebskabel bekannt.

Der Erfindung liegt die Aufgabe zugrunde eine einfache Betätigungs-Vorrichtung und ein einfaches Verfahren zum Betätigen von Karosserie-Bauteilen eines Fahrzeuges zu schaffen, so dass sowohl ein einfaches automatisches Betätigen als auch ein uneingeschränktes manuelles Betätigen von Karosserie-Bauteilen möglich ist.

Diese Aufgabe wird erfindungsgemäß gelöst durch eine Betätigungs-Vorrichtung und ein Verfahren zum Betätigen von Karosserie-Bauteilen eines Fahrzeuges mit den Merkmalen der unabhängigen Ansprüche 1 und 9. Der Kern der Erfindung besteht darin, dass die elektromechanische Antriebs-Einheit mindestens ein antreibbares erstes Anschlag-Element und die Kraftübertragungs-Einheit mindestens ein mit dem mindestens einen zu betätigenden Karosserie-Bauteil verbundenes zweites Anschlag-Element aufweist, wobei das mindestens eine erste Anschlag-Element zur Übertragung der Betätigungs-Kraft von der Antriebs-Einheit auf die Kraftübertragungs-Einheit in der Kraftübertragungs-Richtung gegen das mindestens eine zweite Anschlag-Element anliegend anordenbar ist, und zur Entkopplung der Antriebs-Einheit von der Kraftübertragungs-Einheit entlang der Kraftübertragungs-Richtung von dem mindestens einen zweiten Anschlag-Element beabstandet anordenbar ist. Liegt das mindestens eine erste Anschlag-Element gegen das mindestens eine zweite Anschlag-Element an, so ist in der Kraftübertragungs-Richtung eine Kraftübertragung von der Antriebs-Einheit auf die Kraftübertragungs-Einheit möglich, wodurch das mindestens eine Karosserie-Bauteil automatisch betätigbar ist. Ist das mindestens eine erste Anschlag-Element von dem mindestens einen zweiten Anschlag-Element entlang der Kraftübertragungs-Richtung beabstandet, so ist eine Kraftübertragung von der Antriebs-Einheit auf die Kraftübertragungs-Einheit nicht möglich, wodurch diese entkoppelt sind und ein uneingeschränktes manuelles Betätigen des mindestens einen Karosserie-Bauteils möglich ist. Durch die erfindungsgemäße Ausbildung der Antriebs-Einheit und der Kraftübertragungs-Einheit ist eine schaltbare, elektromechanische Kupplung zur Entkopplung der Antriebs-Einheit und der Kraftübertragungs-Einheit nicht mehr erforderlich, wodurch die Betätigungs-Vorrichtung einfach aufgebaut und sehr zuverlässig ist.

Weitere vorteilhafte Ausgestaltungen der Erfindung ergeben sich aus den Unteransprüchen.

Weitere Vorteile und Merkmale der Erfindung ergeben sich aus der nachfolgenden Beschreibung eines bevorzugten Ausführungsbeispiels anhand der Zeichnung. Es zeigen:
- Fig. 1: eine schematische Darstellung einer Betätigungs-Vorrichtung zum Betätigen einer Heckklappe eines Fahrzeuges bei geschlossener Heckklappe,
- Fig. 2: eine schematische Darstellung der Betätigungs-Vorrichtung gemäß Fig. 1 bei geöffneter Heckklappe,
- Fig. 3: eine Schnittdarstellung durch die Betätigungs-Vorrichtung in einer Ruhestellung bei geschlossener Heckklappe gemäß Fig. 1,
- Fig. 4: eine Schnittdarstellung durch die Betätigungs-Vorrichtung in einer Öffnungsstellung bei geöffneter Heckklappe gemäß Fig. 2,
- Fig. 5: eine Schnittdarstellung durch die Betätigungs-Vorrichtung in einer Schließstellung bei geschlossener Heckklappe gemäß Fig. 1, und

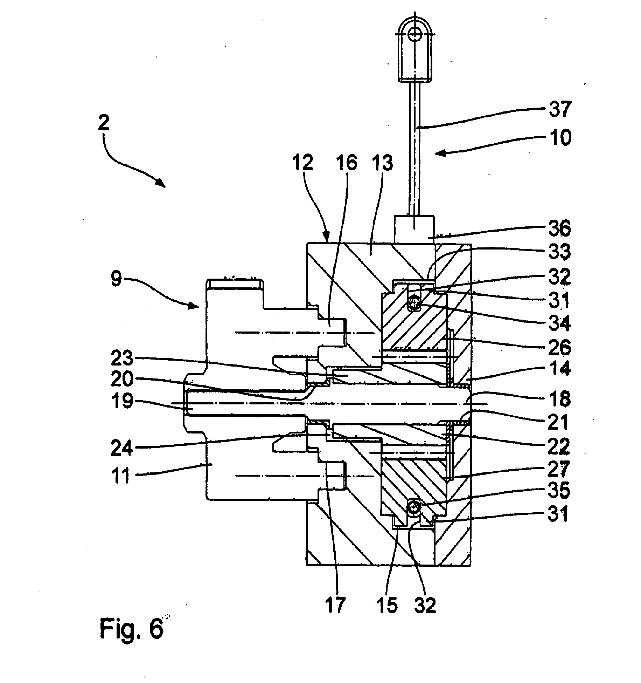

- Fig. 6: eine Schnittdarstellung durch die Betätigungs-Vornchtung gemäß Fig. 5 entlang der Schnittlinie VI-VI.

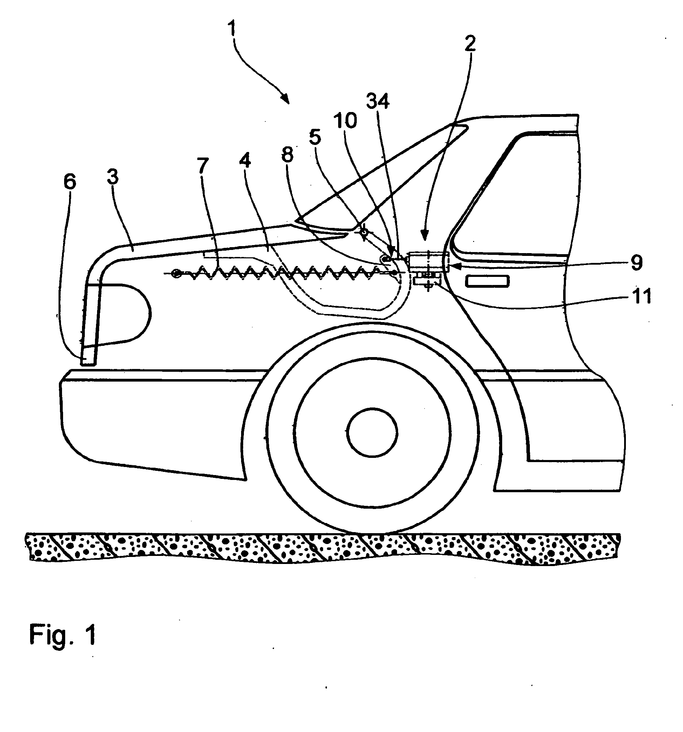

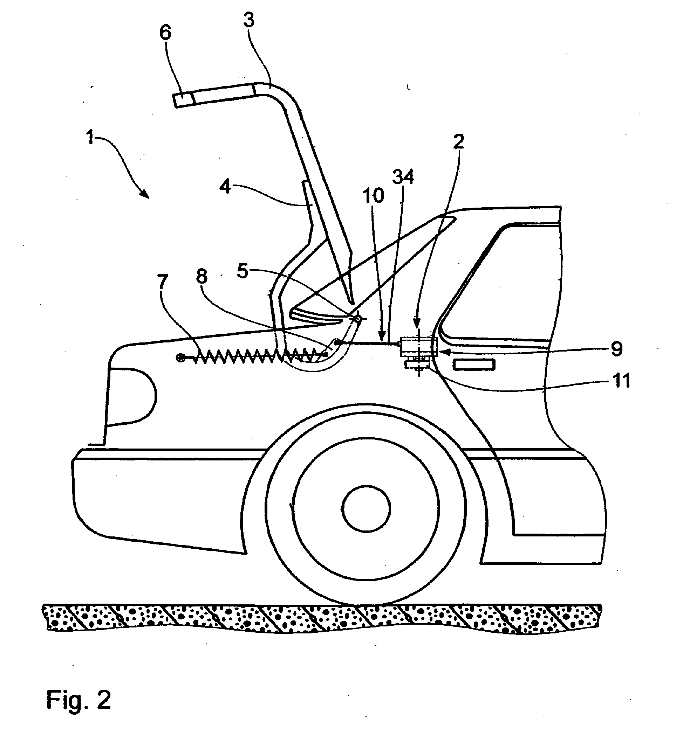

In den Fig. 1 und 2 ist eine in ein Kraftfahrzeug 1 montierte Betätigungs-Vorrichtung 2 zum Betätigen eines als Heckklappe ausgebildeten Karosserie-Bauteils 3 schematisch dargestellt. Nachfolgend wird das Karosserie-Bauteil 3 als Heckklappe bezeichnet. Die Heckklappe 3 ist mit Schwenk-Bügeln 4 verbunden, die zum Öffnen und Schließen der Heckklappe 3 um eine Schwenkachse 5 schwenkbar an dem Kraftfahrzeug 1 angeordnet sind.

Zum Verriegeln der Heckklappe 3 im geschlossenen Zustand ist eine in den Fig. 1 und 2 lediglich angedeutete Vernegelungs-Einheit 6 in Form eines Heckklappen-Schlosses vorgesehen. Die Verriegelungs-Einheit 6 ist in bekannter Weise ausgebildet und an der Heckklappe 3 des Kraftfahrzeuges 1 angeordnet.

Zum selbsttätigen Öffnen der Heckklappe 3 sind Energiespeicher-Elemente 7 vorgesehen, die als Schraubenfedern ausgebildet sind. Die Energiespeicher-Elemente 7 sind jeweils mit einem ersten Ende an dem Kraftfahrzeug 1 und mit einem zweiten Ende an einer Befestigungs-Lasche 8 des jeweiligen Schwenk-Bügels 4 befestigt. Die Energiespeicher-Elemente 7 sind derart ausgelegt, dass das durch die Gewichtskraft der Heckklappe 3 erzeugte Drehmoment um die Schwenkachse 5 von den Energiespeicher-Elementen 7 überkompensiert wird, so dass die Heckklappe 3 selbsttätig aus einer geschlossenen Position gemäß Fig. 1 in eine geöffnete Position gemäß Fig. 2 schwenkt, sobald die Verriegelungs-Einheit 6 entriegelt wird. Eine derartige Auslegung der Energiespeicher-Elemente 7 ist für den Einsatz der nachfolgend beschriebenen Betätigungs-Vorrichtung 2 zwingend. Die Energiespeicher-Elemente 7 können je nach Anwendung und Auslegung beliebig, beispielsweise in Form von Zugfedern, Druckfedern, Gasdruckfedern, Drehstabfedern oder Zusatzgewichten, ausgebildet sein.

Die Betätigungs-Vorrichtung 2 wird aus einer elektromechanischen Antriebs-Einheit 9 zum Erzeugen einer Betätigungs-Kraft und einer Kraftübertragungs-Einheit 10 zum Übertragen dieser Betätigungs-Kraft auf die Heckklappe 3 gebildet. Die Antriebs-Einheit 9 weist einen elektronisch ansteuerbaren Antriebs-Motor 11 auf, der außerhalb und im Wesentlichen mittig an einem quaderförmigen Gehäuse 12 angeordnet ist. Das Gehäuse 12 ist zweiteilig ausgebildet und weist einen Gehäuse-Grundkörper 13 und einen an diesem befestigbaren Gehäuse-Deckel 14 auf, wobei der Gehäuse-Grundkörper 13 und der Gehäuse-Deckel 14 einen Gehäuse-Innenraum 15 begrenzen. Der Antriebs-Motor 11 ist an der dem Gehäuse-Deckel 14 abgewandten Seite des Gehäuse-Grundkörpers 13 angeordnet, wobei der Antriebs-Motor 11 zur Verdrehsicherung gegenüber dem Gehäuse 12 einteilig angeformte und stufenförmig ausgebildete Befestigungs-Stifte 16 aufweist, die in entsprechend ausgeformte Gehäuse-Ausnehmungen 17 eingreifen. Die Befestigung des Antriebs-Motors 11 an dem Gehäuse 12 erfolgt mittels bekannter Befestigungs-Mittel.

Eine um eine Drehachse 18 drehantreibbare Antriebs-Welle 19 des Antriebs-Motors 11 ist durch eine den Gehäuse-Grundkörper 13 durchbrechende und als erstes Lager ausgebildete Gehäuse-Bohrung 20 in den Gehäuse-Innenraum 15 geführt. Die Antriebs-Welle 19 erstreckt sich durch den Gehäuse-Innenraum 15 bis zu dem Gehäuse-Deckel 14 und ist in einer als zweites Lager ausgebildeten Gehäuse-Deckel-Bohrung 21 drehbar um die Drehachse 18 aufgenommen. Zwischen dem Gehäuse-Grundkörper 13 und dem Gehäuse-Deckel 14 ist im Gehäuse-Innenraum 15 auf der Antriebs-Welle 19 ein Zahnrad 22 angeordnet, das mit der Antriebs-Welle 19 verbunden und mittels des Antriebs-Motors 11 die Drehachse 18 drehantreibbar ist. Zur Lagerung des Zahnrades 22 in den Gehäuse-Grundkörper 13 weist dieses einen einteilig angeformten Lager-Fortsatz 23 auf, der in einer entsprechend ausgeformten und konzentrisch zu der Drehachse 18 angeordneten Lager-Ausnehmung 24 aufgenommen ist. Alternativ können auch mehrere Zahnräder 22 oder zusätzlich ein in den Antriebs-Motor 11 integriertes Getriebe vorgesehen sein.

Der Gehäuse-Innenraum 15 ist im Wesentlichen H-förmig ausgebildet, wobei sich ausgehend von dem Gehäuse-Grundkörper 13 zwei einteilig mit diesem ausgebildete Gehäuse-Stege 25 in den Gehäuse-Innenraum 15 bis zu dem Zahnrad 22 erstrecken. Der Gehäuse-Grundkörper 13, der Gehäuse-Deckel 14 und die Gehäuse-Stege 25 bilden Führungen für eine erste Zahnstange 26 und eine zweite Zahnstange 27 aus, die in dem Gehäuse-Innenraum 15 angeordnet sind. Die Zahnstangen 26, 27 sind mit dem Zahnrad 22 verzahnt, wobei bei einer Drehung des Zahnrades 22 in einer Dreh-Richtung 28 die erste Zahnstange 26 in eine erste Kraftübertragungs-Richtung 29 und die zweite Zahnstange 27 in eine zweite Kraftübertragungs-Richtung 30 verlagerbar ist.

Die erste Zahnstange 26 weist an einer dem Zahnrad 22 abgewandten Seite ein erstes Anschlag-Element 31 auf, das quer zu der ersten Kraftübertragungs-Richtung 29 hervorspringend und einteilig an einem - in der ersten Kraftübertragungs-Richtung 29 betrachtet - ersten Ende der Zahnstange 26 ausgebildet ist. Das erste Anschlag-Element 31 weist eine entlang der ersten Kraftübertragungs-Richtung 29 verlaufende Anschlag-Element-Nut 32 auf, die das erste Anschlag-Element 31 vollständig durchbricht. Das hervorspringend ausgebildete erste Anschlag-Element 31 erstreckt sich in eine durch den Gehäuse-Grundkörper 13 und den Gehäuse-Deckel 14 gebildete Aufnahme-Nut 33. Die Aufnahme-Nut 33 bildet entlang der ersten Kraftübertragungs-Richtung 29 einen Freiraum für die Bewegung des ersten Anschlag-Elements 31 aus. Die zweite Zahnstange 27 ist mit einem entsprechend ausgebildeten und angeordneten ersten Anschlag-Element 31 versehen.

Die Antriebs-Einheit 9 umfasst im den Antriebs-Motor 11, das Gehäuse 12, das Zahnrad 22 und die erste und zweite Zahnstange 26, 27 mit dem jeweils ersten Anschlag-Element 31.

Die Kraftübertragungs-Einheit 10 weist ein der ersten Zahnstange 26 zugeordnetes erstes Betätigungs-Element 34 und ein der zweiten Zahnstange 27 zugeordnetes zweites Betätigungs-Element 35 auf. Die Betätigungs-Elemente 34, 35 sind jeweils an einem dem Gehäuse 12 abgewandten Ende an der Befestigungs-Lasche 8 des zugehörigen Schwenk-Bügels 4 der Heckklappe 3 befestigt. Die Betätigungs-Elemente 34, 35 sind als Bowdenzüge ausgebildet und ermöglichen eine Übertragung von Zugkräften, die in der jeweiligen Kraftübertragungs-Richtung 29, 30 auf die Betätigungs-Elemente 34, 35 wirken. Die als Bowdenzüge ausgebildeten Betätigungs-Elemente 34, 35 sind in bekannterweise aufgebaut und weisen eine flexible Ummantelung 36 und ein darin geführtes Drahtseil 37 auf.

Das erste Betätigungs-Element 34 ist durch eine den Gehäuse-Grundkörper 13 durchbrechende Durchführungs-Öffnung 38 in den Gehäuse-Innenraum 15 geführt. Die Durchführungs-Öffnung 38 erstreckt sich entlang der ersten Kraftübertragungs-Richtung 29 und ist an der dem ersten Anschlag-Element 31 zugewandten Seite des Gehäuse-Grundkörpers 13 derart angeordnet, dass diese im Wesentlichen mit der Anschlag-Element-Nut 32 fluchtet. Das erste Betätigungs-Element 34 weist an seinem in den Gehäuse-Innenraum 15 geführten Ende ein zweites Anschlag-Element 39 auf. Das zweite Anschlag-Element 39 ist mit dem ersten Betätigungs-Element 34 verbunden und in der ersten Kraftübertragungs-Richtung 29 dem ersten Anschlag-Element 31 derart nachgeordnet, dass das erste Betätigungs-Element 34 im Wesentlichen geradlinig durch den Gehäuse-Innenraum 15 und die Anschlag-Element-Nut 32 geführt ist. Das zweite Anschlag-Element 39 weist einen im Vergleich zu der Anschlag-Element-Nut 32 größeren Durchmesser auf, so dass das erste Anschlag-Element 31 und das zweite Anschlag-Element 39 eine Hinterschneidung ausbilden. Das erste Anschlag-Element 31 wirkt zur Übertragung einer Betätigungs-Kraft von der Antriebs-Einheit 9 auf die Kraftübertragungs-Einheit 10 mit dem zweiten Anschlag-Element 39 zusammen. Die Kraftübertragung von dem ersten Anschlag-Element 31 auf das zweite Anschlag-Element 39 erfolgt dabei durch Anliegen der Anschlag-Elemente 31, 39 aneinander. Das zweite Betätigungs-Element 35 ist in entsprechender Weise in den Gehäuse-Innenraum 15 geführt und mit einem zweiten Anschlag-Element 39 versehen.

Zwischen den Anschlag-Elementen 31, 39 ist jeweils ein elastisches Dämpfungs-Element 40 angeordnet. Die Dämpfungs-Elemente 40 dienen zur Dämpfung des Anschlagens der Anschlag-Elemente 31, 39 aneinander. Das zur Kraftübertragung erforderliche Anliegen der Anschlag-Elemente 31, 39 aneinander - wie oben beschrieben - umfasst somit das mittelbare Anliegen der Anschlag-Elemente 31, 39 aneinander, wobei die Anschlag-Elemente 31, 39 unmittelbar gegen das jeweilige Dämpfungs-Element 40 anliegen.

Die zweiten Anschlag-Elemente 39 sind an einer den Dämpfungs-Elementen 40 abgewandten Seite jeweils mit einem Feder-Element 41 in Form einer Schraubenfeder verbunden. Die Feder-Elemente 41 erstrecken sich im Wesentlichen entlang der jeweiligen Kraftübertragungs-Richtung 29, 30 und sind relativ zu den ersten Anschlag-Elementen 31 gegenüberliegend zu der jeweiligen Durchführungs-Öffnung 38 an dem Gehäuse-Grundkörper 13 befestigt. Die Betätigungs-Elemente 34, 35 können alternativ auch aufgewickelt werden.

Die Kraftübertragungs-Einheit 10 umfasst die Betätigungs-Elemente 34, 35, die zweiten Anschlag-Elemente 39, die Dämpfungs-Elemente 40 und die Feder-Elemente 41.

Die Betätigungs-Vorrichtung 2 ist im Kraftfahrzeug 1 im Bereich unterhalb der Heckablage angeordnet und dort befestigt. Zur Ansteuerung der Antriebs-Einheit 9 ist eine nicht dargestellte Steuer-Einheit vorgesehen. Die Steuer-Einheit ist im Bereich des Antriebs-Motors 11 angeordnet und steht in Signalverbindung mit Sensoren und mit einer Zentral-Steuer-Einheit für das Kraftfahrzeug 1. Alternativ kann die Antriebs-Einheit 9 auch von der Zentral-Steuer-Einheit ansteuerbar sein.

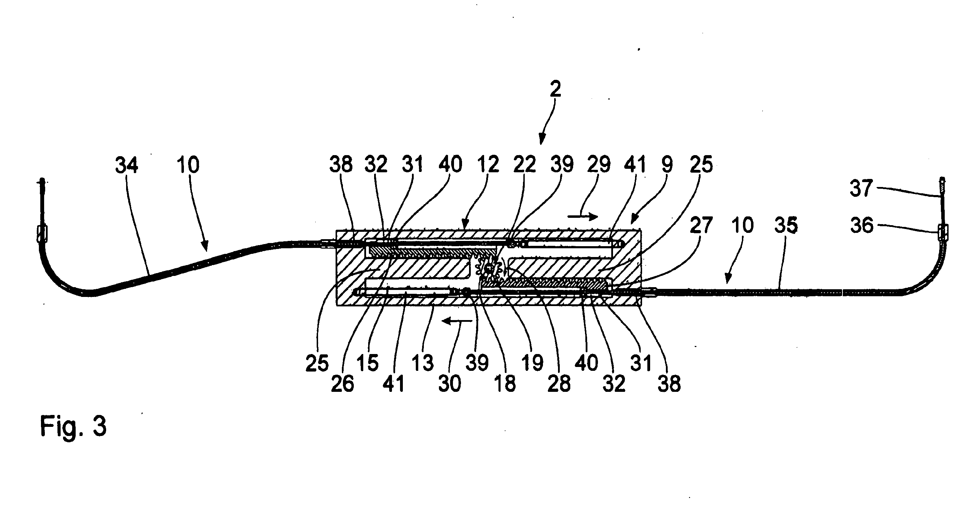

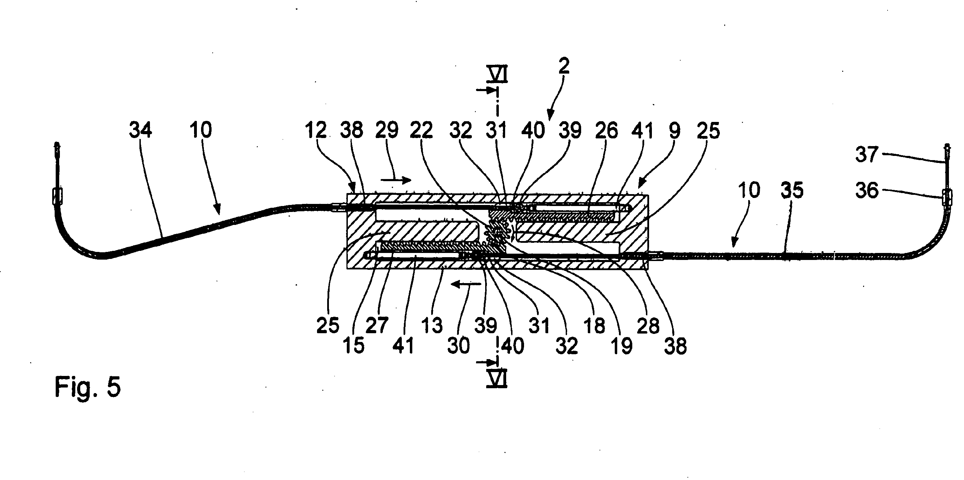

Je nach gewünschtem Funktionsumfang der Betätigungs-Vorrichtung 2 sind verschiedene in Signalverbindung mit der Steuer-Einheit stehende Sensoren vorgesehen. In der einfachsten Ausführung weist die Betätigungs-Vorrichtung 2 als Sensoren-Endschalter zur Detektion der Ruhestellung gemäß Fig. 3 und der Schließstellung gemäß Fig. 5 auf. Zur Erfassung der Position der Heckklappe 3 kann ferner ein Positionssensor in die Betätigungs-Vorrichtung 2 integriert werden. Weiterhin kann zur Erfassung der Geschwindigkeit des Antriebs-Motors 11 ein Geschwindigkeitssensor, beispielsweise ein Hall-Sensor, vorgesehen sein.

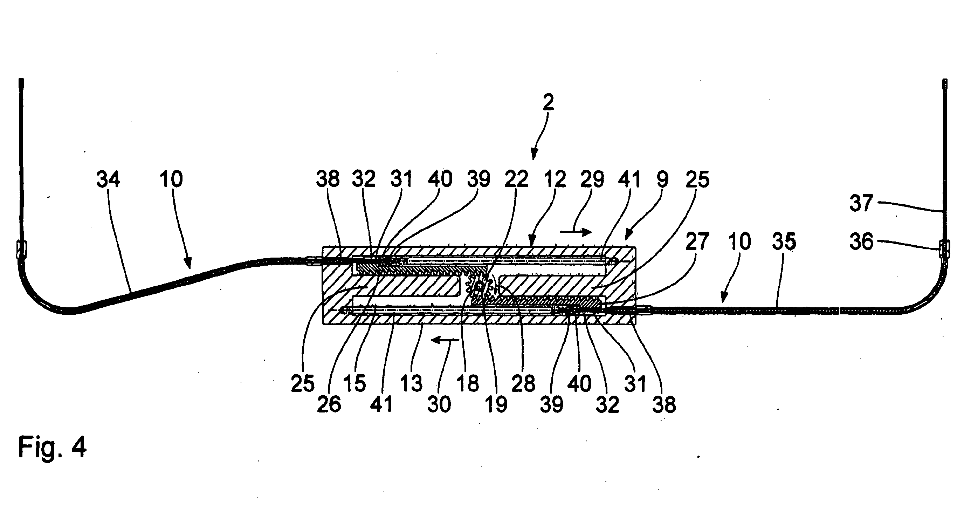

Im Folgenden wird die Funktion der Betätigungs-Vorrichtung 2 beim manuellen und automatischen Betätigungen der Heckklappe 3 beschrieben. Zunächst wird ausgehend von Fig. 1 und Fig. 3 das Öffnen der Heckklappe 3 betrachtet. Die Heckklappe 3 ist zunächst geschlossen und durch die Verriegelungs-Einheit 6 verriegelt. Die Energiespeicher-Elemente 7 sind in der geschlossenen Position der Heckklappe 3 vorgespannt. Die Betätigungs-Vorrichtung 2 ist in der in Fig. 3 gezeigten Ruhestellung, wobei die jeweils zusammenwirkenden ersten und zweiten Anschlag-Elemente 31, 39 entlang der jeweiligen Kraftübertragungs-Richtung 29, 30 maximal voneinander beabstandet sind. Die Betätigungs-Elemente 34, 35 sind durch die Zugkraft der Feder-Elemente 41 maximal in den Gehäuse-Innenraum 15 gezogen. Die Zahnstangen 26, 27 sind derart in dem Gehäuse-Innenraum 15 angeordnet, dass die ersten Anschlag-Elemente 31 unmittelbar zu der jeweiligen Durchführungs-Öffnung 38 benachbart angeordnet sind. Zum Öffnen der Heckklappe 3 wird zunächst die Verriegelungs-Einheit 6 entriegelt. Dies kann entweder rein manuell oder ferngesteuert erfolgen. Nach dem Entriegeln der Heckklappe 3 öffnet diese aufgrund der vorgespannten Energiespeicher-Elemente 7 selbsttätig und schwenkt in die in Fig. 2 gezeigte Position. Durch das Verschwenken der Heckklappe werden die an den Befestigungs-Laschen 8 der Schwenk-Bügel 4 befestigten Betätigungs-Elemente 34, 35 mitgenommen und aus dem Gehäuse-Innenraum 15 gezogen. Erreicht die Heckklappe 3 die in Fig. 2 gezeigte Position, so schlagen die zweiten Anschlag-Elemente 39 gegen das jeweilige Dämpfungs-Element 40 an, wobei durch das Herausziehen der Betätigungs-Elemente 34, 35 die Feder-Elemente 41 vorgespannt werden. Diese Öffnungsstellung der Betätigungs-Vorrichtung 2 ist in Fig. 4 gezeigt. Dadurch, dass die Anschlag-Elemente 31, 39 beim Öffnen der Heckklappe 3 nicht gegeneinander anliegen, ist die Antriebs-Einheit 9 von der Kraftübertragungs-Einheit 10 beim Öffnen entkoppelt. Das Öffnen der Heckklappe 3 wird somit durch die Betätigungs-Vorrichtung 2 nicht beeinflusst.

Nachfolgend wird ausgehend von den Fig. 2 und 4 das manuelle Schließen der Heckklappe 3 beschrieben. Die Heckklappe 3 befindet sich in der in Fig. 2 gezeigten geöffneten Position. Die Betätigungs-Vorrichtung 2 weist die in Fig. 4 gezeigte Öffnungsstellung auf. Beim Schließen der Heckklappe 3 wird diese manuell in die in Fig. 1 gezeigte Position verschwenkt. Beim Verschwenken werden die an den Befestigungs-Laschen 8 der Schwenk-Bügel 4 befestigten Betätigungs-Elemente 34, 35 entlastet und durch die vorgespannten Feder-Elemente 41 wieder in den Gehäuse-Innenraum 15 gezogen, bis sie die in Fig. 3 gezeigte Ruhestellung erreichen. Beim Schließen entfernen sich die zweiten Anschlag-Elemente 39 wieder von den zugehörigen ersten Anschlag-Elementen 31. Das Schließen ist durch das Verriegeln der Heckklappe 3 mittels der Verriegelungs-Einheit 6 abgeschlossen. Dadurch, dass die Anschlag-Elemente 31, 39 beim manuellen Schließen beabstandet voneinander sind, ist die Antriebs-Einheit 9 von der Kraftübertragungs-Einheit 10 auch beim Schließen der Heckklappe 3 entkoppelt, so dass ein uneingeschränktes manuelles Schließen der Heckklappe 3 möglich ist. Die Antriebs-Einheit 9 wird weder beim Öffnen noch beim manuellen Schließen der Heckklappe 3 aktiviert.

Nachfolgend wird das automatische Öffnen und Schließen der Heckklappe 3 beschrieben. Das automatische Öffnen der Heckklappe 3 unterscheidet sich in einer ersten Betriebsweise der Betätigungs-Vorrichtung 2 von dem manuellen Öffnen nicht. Somit wird auf die Ausführungen zum manuellen Öffnen verwiesen.

Ausgehend von den Fig. 2 und 4 wird nachfolgend das automatische Schließen der Heckklappe 3 beschrieben. Das Schließen der Heckklappe 3 wird zunächst manuell aktiviert, beispielsweise durch das Drücken eines Tasters, woraufhin die Steuer-Einheit die Antriebs-Einheit 9 aktiviert. Die Antriebs-Einheit 9 wird von der Steuer-Einheit derart angesteuert, dass der Antriebs-Motor 11 die Antriebs-Welle 19 und das darauf befestigte Zahnrad 22 in der Dreh-Richtung 28 antreibt. Durch das Drehen des Zahnrades 22 werden die Zahnstangen 26, 27 in die jeweils zugehörige Kraftübertragungs-Richtung 29, 30 bewegt, wobei die ersten Anschlag-Elemente 31 die zweiten Anschlag-Elemente 39 mitnehmen. Die mit den zweiten Anschlag-Elementen 39 verbundenen Betätigungs-Elemente 34, 35 werden somit in der jeweiligen Kraftübertragungs-Richtung 29, 30 in den Gehäuse-Innenraum 15 gezogen. Die durch den Antriebs-Motor 11 erzeugte Betätigungs-Kraft wird durch das Anliegen der Anschlag-Elemente 31, 39 aneinander von der Antriebs-Einheit 9 auf die Kraftübertragungs-Einheit 10 übertragen, wobei die Betätigungs-Kraft in der jeweiligen Kraftübertragungs-Richtung 29, 30 als Zugkraft auf die mit den zweiten Anschlag-Elementen 39 verbundenen Betätigungs-Elemente 34, 35 wirkt. Durch die Betätigungs-Elemente 34, 35 wird die Betätigungs-Kraft auf die Schwenk-Bügel 4 der Heckklappe 3 übertragen wird. Die Heckklappe 3 wird somit durch die Betätigungs-Vorrichtung 2 in die in Fig. 1 gezeigte geschlossene Position verschwenkt. Durch das Schließen der Heckklappe 3 werden die Feder-Elemente 41 entlastet. Das Schließen ist durch das Verriegeln der Heckklappe 3 mittels der Verriegelungs-Einheit 6 abgeschlossen. Die Betätigungs-Vorrichtung 2 weist nach dem automatischen Schließen die in Fig. 5 gezeigte Schließstellung auf.

Zum erneuten Öffnen der Heckklappe 3 wird die Antriebs-Einheit 9 derart angesteuert, dass das Zahnrad 22 entgegen die Dreh-Richtung 28 angetrieben wird und die Zahnstangen 26, 27 entgegen die jeweilige Kraftübertragungs-Richtung 29, 30 bewegt werden. Dadurch, dass die zweiten Anschlag-Elemente 39 aufgrund der geschlossenen Heckklappe 3 in ihrer Position verharren, entfernen sich die ersten Anschlag-Elemente 31 von diesen. Dieser Vorgang wird als Reversieren bezeichnet. Das Reversieren wird unmittelbar nach dem Verriegeln der Heckklappe 3 mittels der Verriegelungs-Einheit 6 eingeleitet, um ein erneutes Öffnen der Heckklappe 3 sofort zu ermöglichen. Das Reversieren der Betätigungs-Vorrichtung 2 ist abgeschlossen, wenn diese die in Fig. 3 gezeigte Ruhestellung erreicht.

Zusätzlich kann die Betätigungs-Vorrichtung 2 beim automatischen Schließen der Heckklappe 3 mit einer elektromechanischen Zuzieh-Vorrichtung zusammenwirken, die an der Verriegelungs-Einheit 6 angreift. Durch eine derartige bekannte Zuzieh-Vorrichtung muss bei der Antriebs-Einheit 9 keine zusätzliche Kraft vorgehalten werden, um den kurz vor dem Schließen der Heckklappe 3 auftretenden Kraftanstieg aufgrund der Deformation von Dichtungen und aufgrund von der Luftverdrängung im Innenraum des Kraftfahrzeuges 1 aufzubringen.

Die Betätigungs-Vorrichtung 2 erlaubt einerseits ein uneingeschränktes manuelles Betätigen der Heckklappe 3 und andererseits ein automatisches Betätigen der Heckklappe 3, wobei eine elektromechanische Kupplung zur Entkopplung der Antriebs-Einheit 9 und der Kraftübertragungs-Einheit 10 nicht erforderlich ist. Dadurch, dass die Anschlag-Elemente 31, 39 voneinander beabstandet anordenbar sind, wird einerseits eine Entkopplung der Antriebs-Einheit 9 von der Kraftübertragungs-Einheit 10 ermöglicht und dadurch, dass die Anschlag-Elemente 31, 39 aneinander anliegend anordenbar sind, ist eine Übertragung der Betätigungs-Kraft von der Antriebs-Einheit 9 auf die Kraftübertragungs-Einheit 10 möglich.

Bei einer zweiten Betriebsweise der Betätigungs-Vorrichtung 2 kann die Antriebs-Einheit 9 zur Regelung der Geschwindigkeit der Heckklappe 3 beim selbsttätigen Öffnen genutzt werden. Die Betätigungs-Vorrichtung 2 verharrt dabei nicht in der Fig. 3 gezeigten Ruhestellung, sondern wird derart angesteuert, dass die ersten Anschlag-Elemente 31 den zweiten Anschlag-Elementen 39 beim Öffnen in der jeweiligen Kraftübertragungs-Richtung 29, 30 vorauslaufen und dadurch die freie Bewegung der zweiten Anschlag-Elemente 39 bremsen und den zweiten Anschlag-Elementen 39 eine gewünschte Geschwindigkeit aufzwingen. Ist die Antriebs-Einheit 9 zusätzlich selbsthemmend ausgelegt oder mit einem zusätzlichen BremsElement versehen, so kann die Heckklappe 3 auch in beliebigen Zwischenstellungen angehalten werden.

Mittels der Steuer-Einheit kann die Antriebs-Einheit 9 zusätzlich derart angesteuert werden, dass ein Einklemmschutz beim Schließen der Heckklappe 3 realisiert wird. Hierzu wird von der Steuer-Einheit die Stromaufnahme des Antriebs-Motors 11 überwacht und ausgewertet. Positionssensoren, Geschwindigkeitssensoren und/oder taktile Sensorleisten an der Heckklappe 3 können zusätzlich zur Realisierung eines Einklemmschutzes verwendet werden.

Die Betätigungs-Vorrichtung 2 kann zum Betätigen beliebiger verschwenkbarer oder verschiebbarer Karosserie-Bauteile 3 eingesetzt werden, beispielsweise für Klappen, Türen, Spoiler oder Abdeckungen. Weiterhin können die zu betätigenden Karosserie-Bauteile 3 mit einem Eingelenk-Scharnier oder Mehrgelenk-Scharnier, in einer Linearführung oder in einer Führung mit beliebigem Bahnverlauf gelagert sein.

Die Betätigungs-Vornchtung 2 kann auch derart ausgebildet sein, dass die Betätigungs-Elemente 34, 35 Druckkräfte übertragen oder dass die Betätigungs-Elemente 34, 35 parallel in eine Richtung angetrieben werden.

Die Anschlag-Elemente 31, 39 können prinzipiell entlang einer beliebigen Bahn bewegt werden, beispielsweise entlang einer Kreis- oder Kurvenbahn. Weiterhin können die Anschlag-Elemente 31, 39 auch an einer Spindel und einer relativ zu der Spindel beweglichen Spindelmutter angeordnet sein.

## Patentansprüche

1. Betätigungs-Vorrichtung zum Betätigen von Karosserie-Bauteilen eines Fahrzeuges,
a. mit einer elektromechanischen Antriebs-Einheit (9) zum Erzeugen einer Betätigungs-Kraft, die
i. einen elektronisch ansteuerbaren Antriebs-Motor (11), und
ii. mindestens ein von dem Antriebs-Motor (11) antreibbares erstes Anschlag-Element (31) aufweist,
b. mit einer Kraftübertragungs-Einheit (10) zum Übertragen der Betätigungs-Kraft auf mindestens ein Karosserie-Bauteil (3), die
i. mindestens ein mit dem mindestens einen Karosserie-Bauteil (3) verbundenes Betätigungs-Element (34, 35), und
ii. mindestens ein mit dem mindestens einen Betätigungs-Element (34, 35) verbundenes und mit dem mindestens einen ersten Anschlag-Element (31) zusammenwirkendes zweites Anschlag-Element (39) aufweist,
c. wobei die Antriebs-Einheit (9) und die Kraftübertragungs-Einheit (10) derart ausgebildet sind, dass
i. das mindestens eine erste Anschlag-Elemente (31) zur Übertragung der Betätigungs-Kraft auf das mindestens eine zweite Anschlag-Element (39) entlang einer Kraftübertragungs-Richtung (29, 30) gegen das mindestens eine zweite Anschlag-Element (39) anliegend anordenbar ist, und
ii. das mindestens eine erste Anschlag-Element (31) zur Entkopplung der Antriebs-Einheit (9) von der Kraftübertragungs-Einheit (10) entlang der Kraftübertragungs-Richtung (29, 30) von dem mindestens einen zweiten Anschlag-Element (39) beabstandet anordenbar ist,
**dadurch gekennzeichnet, dass**
d) die Kraftübertragungs-Einheit (10) mindestens ein mit dem mindestens einen zweiten Anschlag-Element (39) verbundenes FederElement (41) aufweist, und
e) dass das mindestens eine Betätigungs-Element (34, 35) als Bowdenzug ausgebildet ist.

2. Betätigungs-Vorrichtung nach Anspruch 1, **dadurch gekennzeichnet, dass** die Kraftübertragungs-Einheit (10) mindestens ein elastisches und zwischen den Anschlag-Elementen (31, 39) angeordnetes DämpfungsElement (40) aufweist.

3. Betätigungs-Vorrichtung nach einem der Ansprüche 1 bis 2, **dadurch gekennzeichnet, dass** die Antriebs-Einheit (9) mindestens ein von dem Antriebs-Motor (11) drehantreibbares Zahnrad (22) aufweist.

4. Betätigungs-Vorrichtung nach Anspruch 3, **dadurch gekennzeichnet, dass** die Antriebs-Einheit (9) mindestens eine mit dem mindestens einen Zahnrad (22) verzahnte und verlagerbare Zahnstange (26, 27) aufweist.

5. Betätigungs-Vorrichtung nach Anspruch 4, **dadurch gekennzeichnet, dass** das mindestens eine erste Anschlag-Element (31) einteilig mit der mindestens einen Zahnstange (26, 27) ausgebildet ist.

6. Betätigungs-Vorrichtung nach Anspruch 4 oder 5, **dadurch gekennzeichnet, dass** die Antriebs-Einheit (9) ein die mindestens eine Zahnstange (26, 27) führendes Gehäuse (12) aufweist.

7. Verfahren zum Betätigen von Karosserie-Bauteilen eines Fahrzeuges, mit den Schritten:
- Bereitstellen einer Betätigungs-Vorrichtung (2), mit
-- einer elektromechanischen Antriebs-Einheit (9) zum Erzeugen einer Betätigungs-Kraft, wobei die Antriebs-Einheit (9) mindestens ein antreibbares erstes Anschlag-Element (31) aufweist, und
-- einer Kraftübertragungs-Einheit (10) zum Übertragen der Betätigungs-Kraft auf mindestens ein Karosserie-Bauteil (3), wobei die Kraftübertragungs-Einheit (10) mindestens ein mit dem mindestens einen Karosserie-Bauteil (3) verbundenes zweites Anschlag-Element (39) aufweist, und
- Ansteuern der Antriebs-Einheit (9) derart, dass
-- das mindestens eine erste Anschlag-Element (31) zur Übertragung der Betätigungs-Kraft auf das mindestens eine zweite Anschlag-Element (39) entlang einer Kraftübertragungs-Richtung (29, 30) gegen das mindestens eine zweite Anschlag-Element (39) anliegend angeordnet wird, und
-- das mindestens eine erste Anschlag-Element (31) zur Entkopplung der Antriebs-Einheit (9) von der Kraftübertragungs-Einheit (10) entlang der Kraftübertragungs-Richtung (29, 30) von dem mindestens einen zweiten Anschlag-Element (39) beabstandet angeordnet wird,
**dadurch gekennzeichnet, dass**
- die Kraftübertragungs-Einheit (10) mindestens ein mit dem mindestens einen zweiten Anschlag-Element (39) verbundenes FederElement (41) aufweist, und
- dass das mindestens eine Betätigungs-Element (34, 35) als Bowdenzug ausgebildet ist.

## Claims

1. An operating device for operating body components of a vehicle, comprising
a. an electromechanical drive unit (9) for producing an operating power, having
i. a drive motor (11) which is able to be triggered electronically, and
ii. at least one first stop element (31) which is drivable by the drive motor (11);
b. a power transmission unit (10) for transmitting the operating power to at least one body component (3), the power transmission unit (10) having
i. at least one operating element (34, 35) which is connected to the at least one body component (3), and
ii. at least one second stop element (39) which is connected to the at least one operating element (34, 35) and cooperates with the at least one first stop element (31);
c. the drive unit (9) and the power transmission unit (10) being configured such that
i. the at least one first stop element (31) being disposable to bear against the at least one second stop element (39) for transmission of the operating power to the at least one second stop element (39) in a direction of power transmission (29, 30), and
ii. the at least one first stop element (31) being disposable to be spaced from the at least one second stop element (39) for uncoupling of the drive unit (9) from the power transmission unit (10) in the direction of power transmission (29, 30),
**characterized in that**
d. the power transmission unit (10) comprises at least one spring element (41) which is connected to the at least one second stop element (39), and
e. **in that** the at least one operating element (34, 35) is a Bowden cable.

2. An operating device according to claim 1, **characterized in that** the power transmission unit (10) comprises at least one flexible damping element (40) which is disposed between the stop elements (31, 39).

3. An operating device according to one of claims 1 to 2, **characterized in that** the drive unit (9) comprises at least one gearwheel (22) which is rotarily drivable by the drive motor (11).

4. An operating device according to claim 3, **characterized in that** the drive unit (9) comprises at least one displaceable rack (26, 27) which meshes with the at least one gearwheel (22).

5. An operating device according to claim 4, **characterized in that** the at least one first stop element (31) and the at least one rack (26, 27) are one piece.

6. An operating device according to claim 4 or 5, **characterized in that** the drive unit (9) comprises a casing (12) which guides the at least one rack (26, 27).

7. A method for operating body components of a vehicle, comprising the steps of
a. provision of an operating device (2), having
i. an electromechanical drive unit (9) for producing an operating power, the drive unit (9) having at least one drivable first stop element (31), and
ii. a power transmission unit (10) for transmitting the operating power to at least one body component (3), the power transmission unit (10) having at least one second stop element (39) which is connected to the at least one body component (3); and
b. triggering of the drive unit (9)
i. such that the at least one first stop element (31) for transmission of the operating power to the at least one second stop element (39) in a direction of power transmission (29, 30) is disposed to rest on the at least one second stop element (39), and
ii. such that the at least one first stop element (31) for uncoupling the drive unit (9) from the power transmission unit (10) is disposed at a distance from the at least one second stop element (39) in the direction of power transmission (29, 30),
**characterized in that**
- the power transmission unit (10) comprises at least one spring element (41) which is connected to the at least one second stop element (39), and
- **in that** the at least one operating element (34, 35) is a Bowden cable.

## Revendications

1. Dispositif d'actionnement servant à actionner des composants de carrosserie d'une automobile,
a. comportant une unité d'entraînement (9) électromécanique servant à générer une force d'actionnement, laquelle unité d'entraînement
i. présente un moteur d'entraînement (11) pouvant être commandé de manière électronique, et
ii. au moins un premier élément de butée (31) pouvant être entraîné par le moteur d'entraînement (11),
b. comportant une unité de transmission de force (10) servant à transmettre la force d'actionnement sur au moins un composant de carrosserie (3), laquelle unité de transmission
i. présente au moins un élément d'actionnement (34, 35) relié à l'élément de carrosserie (3) au moins au nombre de un, et
ii. au moins un deuxième élément de butée (39) relié à l'élément d'actionnement (34, 35) au moins au nombre de un et agissant avec le premier élément de butée (31) au moins au nombre de un,
c. l'unité d'entraînement (9) et l'unité de transmission de force (10) étant réalisées de telle sorte que
i. le premier élément de butée (31) au moins au nombre de un servant à transmettre la force d'actionnement sur le second élément de butée (39) au moins au nombre de un puisse être disposé de manière adjacente contre le second élément de butée (39) au moins au nombre de un le long d'une direction de transmission de force (29, 30), et
ii. le premier élément de butée (31) au moins au nombre de un servant à découpler l'unité d'entraînement (9) de l'unité de transmission de force (10) puisse être disposé à distance du second élément de butée (39) au moins au nombre de un le long de la direction de transmission de force (29, 30),
**caractérisé en ce que**
d) l'unité de transmission de force (10) présente au moins un élément-ressort (41) relié au second élément de butée (39) au moins au nombre de un, et **en ce que**
e) l'élément d'actionnement (34, 35) au moins au nombre de un est réalisé comme un câble Bowden.

2. Dispositif d'actionnement selon la revendication 1, **caractérisé en ce que** l'unité de transmission de force (10) présente au moins un élément d'amortissement (40) élastique, disposé entre les éléments de butée (31, 39).

3. Dispositif d'actionnement selon l'une quelconque des revendications 1 à 2, **caractérisé en ce que** l'unité d'entraînement (9) présente au moins une roue dentée (22) pouvant être entraînée en rotation par le moteur d'entraînement (11).

4. Dispositif d'entraînement selon la revendication 3, **caractérisé en ce que** l'unité d'entraînement (9) présente au moins une crémaillère (26, 27) pouvant être déplacée et endentée avec la roue dentée (22) au moins au nombre de une.

5. Dispositif d'entraînement selon la revendication 4, **caractérisé en ce que** le premier élément de butée (31) au moins au nombre de un est réalisé en une seule partie avec la crémaillère (26, 27) au moins au nombre de une.

6. Dispositif d'actionnement selon la revendication 4 ou 5, **caractérisé en ce que** l'unité d'entraînement (9) présente un boîtier (12) guidant la crémaillère (26, 27) au moins au nombre de une.

7. Procédé servant à actionner des composants de carrosserie d'une automobile, comportant les étapes consistant à :
- mettre à disposition un dispositif d'actionnement (2), comportant
-- une unité d'entraînement (9) électromécanique servant à générer une force d'actionnement, l'unité d'entraînement (9) présentant au moins un premier élément de butée (31) pouvant être entraîné, et
-- une unité de transmission de force (10) servant à transmettre la force d'actionnement sur au moins un composant de carrosserie (3), l'unité de transmission de force (10) présentant au moins un second élément de butée (39) relié au composant de carrosserie (3) au moins au nombre de un, et
- commander l'unité d'entraînement (9) de telle sorte que
-- l'élément de butée (31) au moins au nombre de un servant à transmettre la force d'actionnement sur le second élément de butée (39) au moins au nombre de un est disposé de manière adjacente le long d'une direction de transmission de force (29, 30) contre le second élément de butée (39) au moins au nombre de un, et
-- le premier élément de butée (31) au moins au nombre de un servant à découpler l'unité d'entraînement (9) de l'unité de transmission de force (10) est disposé à distance du second élément de butée (39) au moins au nombre de un le long de la direction de transmission de force (29, 30),
**caractérisé en ce que**
- l'unité de transmission de force (10) présente au moins un élément-ressort (41) relié au second élément de butée (39) au moins au nombre de un et
- l'élément d'actionnement (34, 35) au moins au nombre de un est réalisé comme un câble Bowden.
